# EUROPEAN PATENT SPECIFICATION

(11) **EP 0 897 645 B1**
(45) Date of publication and mention of the grant of the patent: **31.08.2005**
(21) Application number: 97922276.7
(22) Date of filing: 06.05.1997
(51) Int. Cl.: H04Q 7/24

(54) **CALL FORWARDING FUNCTION FOR A PORTABLE RADIO COMMUNICATIONS DEVICE**
RUFWEITERLEITUNGSFUNKTION FÜR EINE TRAGBARE FUNKKOMMUNIKATIONSEINRICHTUNG
FONCTION DE REACHEMINEMENT D'APPEL POUR APPAREIL DE RADIOCOMMUNICATION PORTABLE

(30) Priority: 10.05.1996 US 644573
(43) Date of publication of application: 24.02.1999
(73) Proprietor: TELEFONAKTIEBOLAGET LM ERICSSON (publ), 164 83 Stockholm (SE)
(72) Inventor: HANSSON, Magnus, S-212 23 Malmö (SE)
(74) Representative: O'Connell, David Christopher
(86) International application number: PCT/SE1997/000757
(87) International publication number: WO 1997/043864

(56) References cited:
- EP-A- 0 639 034
- GB-A- 2 284 727

## Description

### BACKGROUND

The present invention relates to portable communication devices, such as cellular telephones, and more particularly to methods and apparatus for automatically issuing a call forwarding command to a communications network when the portable communication device has been placed into a battery charging device.

A primary characteristic of a mobile communications system, such as a cellular telephone system, is the fact that subscribers to the system may move around, taking their portable handsets with them. Regardless of a mobile subscriber's location within a service area, a calling party may establish a telephone connection with the mobile subscriber by dialling a telephone number associated with the mobile subscriber's portable handset. Thus, it is unnecessary for a calling party to know the whereabouts of the mobile subscriber before placing the call.

Most people who own a portable cellular telephone also have a conventional, fixed telephone unit at home and/or at work. Such fixed telephones are connected (i.e., hard-wired) to a public switched telephone network (PSTN), and will henceforth be referred to throughout this disclosure as PSTN telephones. A calling party may establish a telephone connection with a called party's PSTN telephone by dialling a telephone number associated with the PSTN telephone.

The telephone number of a person's cellular telephone is typically different from that same person's PSTN telephone. When the person arrives home or at the office, where the PSTN telephone is located, it is convenient to divert incoming calls directed at the cellular telephone so that they will instead be established through the PSTN telephone. One advantage of this arises from the fact that people typically have extension PSTN telephones (including cordless PSTN telephones) situated throughout the home or office, making it more likely that the person is near the telephone when an incoming call arrives. Thus, being able to answer an incoming cellular telephone call on one of these nearby PSTN telephones frees the person from having to keep the cellular telephone nearby. Also, there may be a cost advantage associated with receiving calls on the PSTN telephone instead of on the cellular telephone because it doesn't require any usage of the more expensive air interface.

Having diverted incoming calls from the cellular telephone to a PSTN telephone, it is usually desired to redirect the diverted calls back to the cellular telephone when the user takes the portable handset and leaves the location of the PSTN telephone. In some cases, it may also be desirable at this point to divert incoming calls directed at the PSTN telephone so that they will be received on the cellular telephone. This may be the case, for example, when there will be no one left at the fixed location to answer the PSTN telephone when the incoming call is received.

Most telephone service operators provide a service, referred to as "call forwarding", which allows a subscriber to divert incoming calls from one telephone number to another. For example, in Sweden one may initiate call forwarding by dialling "* 61 * [forwarding telephone number] #". This sequence should be dialled from the telephone from which calls are to be diverted. Once initiated, all incoming calls will be diverted to the telephone corresponding to the "[forwarding telephone number]" specified in the call forwarding initiation sequence. Call forwarding can be cancelled in a similar way. For example, in Sweden one would dial the sequence "#61#" to cancel call forwarding.

Although the above-described call forwarding service may be utilized to achieve the desired result of having incoming calls directed to the appropriate one of the user's several telephones, it has a drawback in that it must be manually invoked by the user, leaving open the possibility that the user may occasionally forget to invoke it at a time when it would be desired, or that the user may make a mistake in the dialling sequence, resulting in having calls redirected to the wrong telephone number.

A known solution to this problem is described in U.S. Patent No. 5,197,092, which issued to Bamburak on March 23, 1993. The referenced patent describes a personal communicator receiving station, also known as a holster, that is capable of receiving a personal communicator unit and communicating therewith. The receiving station is disposed at the same site as the PSTN telephone, and in one embodiment includes the call forwarding number of the PSTN telephone. When the personal communicator (e.g., a cellular telephone) is placed into the receiving station, the call forwarding number is communicated from the receiving station to the personal communicator. The personal communicator then automatically invokes the call forwarding service by communicating the call forwarding number to the network through the personal communications system.

The above-described location registration system has a number of drawbacks. To begin with, the receiving station must include the special circuitry for storing and communicating the call forwarding number to the personal communicator. In applications where the receiving station is intended to be a simple unit, such as a battery charger, this extra circuitry may prohibitively increase production costs.

EP-A-0639034 discloses a mobile communication device which, when it is placed in a battery charger, retrieves a stored forwarding number, and transmits a message to the mobile network to initiate call forwarding.

### SUMMARY

It is therefore an object of the present invention to provide an automatic mechanism for diverting incoming calls from a portable communications handset to another telephone when the user is in the vicinity of the other telephone.

It is yet another object of the invention to provide a mechanism for confirming the authenticity of the receiving unit or charger, to ensure that the portable communications handset is being connected to a high quality device.

In accordance with one aspect of the present invention, the foregoing and other objects are achieved in an automatic call forwarding apparatus in a mobile communications unit as defined in claim 1.

In yet another aspect of the invention, there is provided a method as defined in claim 3.

### BRIEF DESCRIPTION OF THE DRAWINGS

The objects and advantages of the invention will be understood by reading the following detailed description in conjunction with the drawings in which:
FIG. 1 is a block diagram of a telecommunication system including methods and apparatus in accordance with the invention;
FIG. 2 is a flow chart illustrating steps performed by a mobile radio terminal for automatically initiating call forwarding after it has been inserted into a receiving unit, in accordance with one aspect of the invention;
FIG. 3 is a flow chart illustrating steps performed by a mobile radio terminal for automatically cancelling call forwarding after it has been removed from a receiving unit, in accordance with one aspect of the invention;
FIG. 4 is a flow chart illustrating steps performed by a receiving unit for automatically initiating call forwarding after a mobile radio terminal has been removed from the receiving unit;
FIG. 5 is a flow chart illustrating steps performed by a receiving unit for automatically cancelling call forwarding after a mobile radio terminal has been inserted into the receiving unit
FIG. 6 is a flow chart illustrating steps for performing an authentication check as a precondition to automatically initiating call forwarding, in accordance with another aspect of the invention; and
FIG. 7 is a block diagram of exemplary hardware for carrying out the invention.

### DETAILED DESCRIPTION

The various features of the invention will now be described with respect to the figures, in which like parts are identified with the same reference characters.

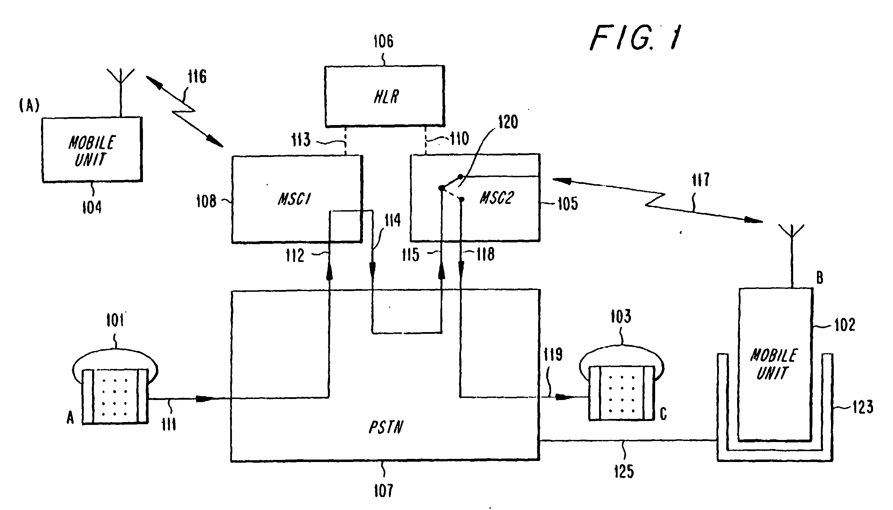

FIG. 1 is a block diagram of a telecommunications system including methods and apparatus in accordance with the invention. In FIG. 1, a wired network PSTN 107 is shown together with a cellular radio network consisting of two mobile services switching centers MSC1 108 and MSC2 105. A calling subscriber pA (not shown) uses a telephone A 101 to dial the telephone number of a called subscriber pB (not shown) having a mobile radio terminal B 102. The connection is via line 111 to the PSTN 107 and via line 112 to the MSC1 108. Alternatively, a mobile radio terminal (A) 104 and a radio channel 116 may be used by the calling subscriber pA instead of the wire-bound terminal 101. MSC1 108 sends the dialed B-number to a home location register (HLR) 106 via signaling connection 113. In return, the HLR 106 sends the MSC1 108 a roaming number allowing routing to the mobile radio terminal B 102 via the PSTN 107, connections 114, 115, the MSC2 105 and a radio channel 117. The roaming number was previously stored into the HLR 106 during a registration process in which the mobile radio terminal B 102 notifies MSC2 105 that it is within MSC2's service area. The MSC2 105 utilizes the signaling connection 110 to complete the registration process with the HLR 106.

In accordance with one aspect of the invention, the system also includes a receiving unit, which in a preferred embodiment is a battery charger 123 located in the vicinity of a wire-bound terminal C 103. The battery charger 123 may be advantageously constructed as a table stand. The mobile radio terminal B 102 and the battery charger 123 are preferably each equipped with means for detecting insertion of the mobile radio terminal B 102 into the battery charger 123. Such means may be, for example, a simple data communication mechanism between the mobile radio terminal B 102 and the battery charger 123. In one embodiment, a serial channel implemented by means of a universal asynchronous receiver-transmitter (UART) is used for this purpose.

The mobile radio terminal B 102 and the battery charger 123 should each further be equipped with means for detecting when the mobile radio terminal B 102 has been removed from the battery charger 123. It is further desirable for the battery charger 123 to be able to establish a connection 125 with the PSTN 107.

In accordance with one aspect of the invention, the mobile radio terminal B 102 further includes means for storing the forwarding telephone number of, in this exemplary embodiment, the wire-bound terminal C 103. These storing means should be a non-volatile memory, such as a flash read only memory (flash ROM), or an erasable programmable read only memory (EPROM), so that the forwarding telephone number will be retained in the mobile radio terminal B 102 even when the power to the unit is turned off. The mobile radio terminal B 102 is preferably equipped with a programmed processor and an input/output mechanism to permit the called subscriber pB to program one or more forwarding telephone numbers into the storing means. Storage of a plurality of forwarding numbers may advantageous if the called subscriber pB has more than one battery charger 123, each associated with a different wire-bound terminal C 103. Including the storing means within the mobile radio terminal B 102 makes it unnecessary for the battery charger 123 to contain comparable storing means or other circuitry for determining the forwarding telephone number and supplying this forwarding telephone number to the mobile radio terminal B 102. By omitting this circuitry, the battery charger 123 may be more economically manufactured.

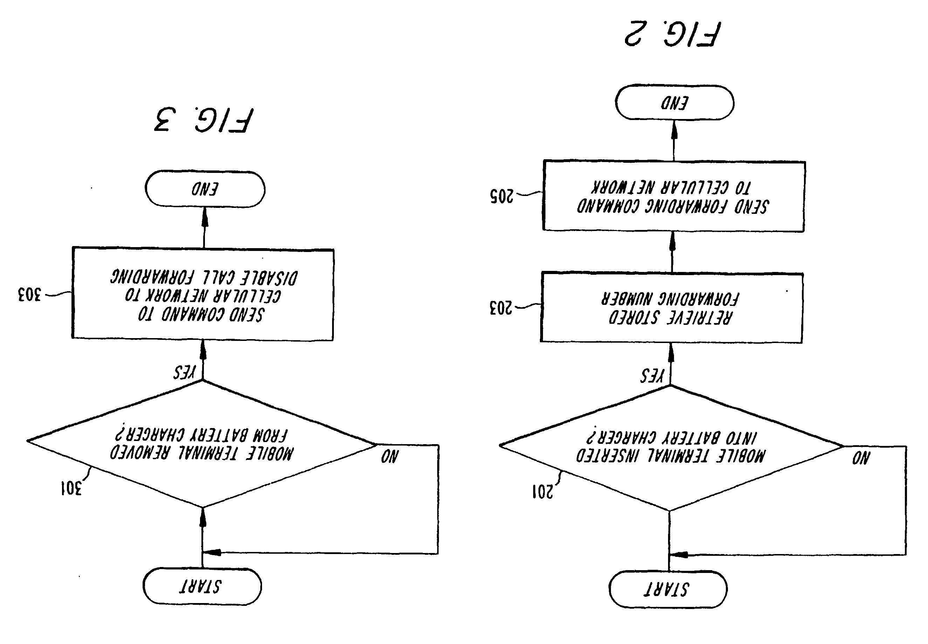

Operation of one embodiment of the invention will now be described with reference to the block diagram of FIG. 1 in conjunction with the flow chart of FIG. 2. The following steps are performed by the mobile radio terminal B 102 after it has been inserted into the battery charger 123. First, the mobile radio terminal B 102 detects that it has been inserted into the battery charger 123 ("YES" path out of decision block 201). Next, the mobile radio terminal B 102 retrieves the forwarding telephone number from the storing means (step 203). In the event that more than one forwarding telephone number is stored in the storing means, the mobile radio terminal B 102 may perform the additional steps (not shown) of asking the battery charger 123 for a unique serial number that is stored in a non-volatile memory within the battery charger 123 (this does not increase the hardware cost of the battery charger 123). Once it has obtained the battery charger's unique serial number, the mobile radio terminal B 102 retrieves that one of the forwarding telephone numbers that is associated with the unique serial number. It will be noted that the first time the mobile radio terminal B 102 is inserted into a battery charger 123 having a serial number that has not been seen before, the called subscriber pB may be prompted to enter a PSTN telephone number associated with the "new" battery charger 123. The mobile radio terminal B 102 can then store this PSTN telephone number for future use.

Finally, the mobile radio terminal B 102 establishes a communication channel 117 with the MSC2 105, and sends the appropriate command for initiating the call forwarding service (step 205). The MSC2 105 then uses signalling connection 110 to register the forwarding telephone number with the HLR 106. The cellular communications network will henceforth forward all of the mobile radio terminal B's calls to the wire-bound terminal C 103 via PSTN 107 and connections 118, 119, as indicated by the switch 120 in MSC2 105.

Another aspect of the invention will now be described with respect to FIG. 1 in conjunction with FIG. 3. The following steps are performed by the mobile radio terminal B 102 after it has been removed from the battery charger 123. First, the mobile radio terminal B 102 detects that it has been removed from the battery charger 123 ("YES" PATH out of decision block 301). Then, the mobile radio terminal B 102 establishes a communication channel 117 with the MSC2 105, and sends the appropriate command for cancelling the call forwarding service (step 303). The MSC2 105 then uses signalling connection 110 to delete the forwarding telephone number from the HLR 106. The cellular communications network will henceforth direct all of the mobile radio terminal B's calls to the mobile radio terminal B 102. This feature is useful because it eliminates the need for the called subscriber pB to have to remember to cancel call forwarding every time he removes the mobile radio terminal B 102 from the battery charger 123.

The above-described features relate to the mobile radio terminal's ability to automatically invoke and disable call forwarding when respectively inserted into and removed from the battery charger 123. In some circumstances, it may be additionally desirable for calls to be automatically forwarded from the wire-bound terminal C 103 to the mobile radio terminal B 102 whenever the mobile radio terminal B 102 is removed from the battery charger 123. When this feature is available, it would additionally be useful for this call forwarding to be cancelled whenever the radio terminal B 102 is reinserted into the battery charger 123. To make these features possible, the battery charger 123 should be further equipped with circuitry to perform a number of functions, including means for storing a forwarding telephone number that identifies the mobile radio terminal B 102.

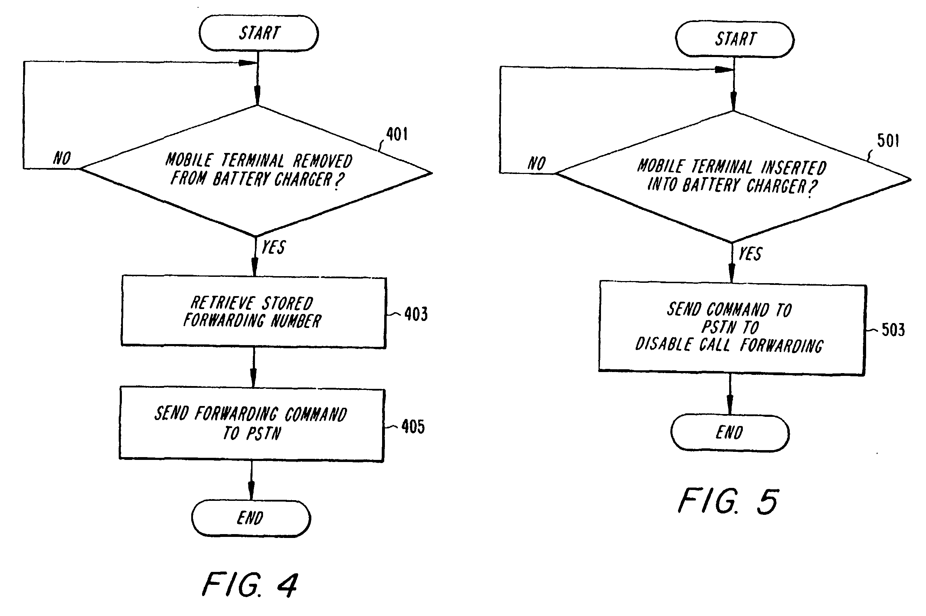

This battery charger call forwarding feature will now be described with respect to FIG. 1 in conjunction with FIG. 4. The following steps are performed by circuitry in the battery charger 123 after the mobile radio terminal B 102 has been removed from the battery charger 123. First, the battery charger 123 detects that the mobile radio terminal B 102 has been removed from the battery charger 123 ("YES" PATH out of decision block 401). Then, the battery charger 123 accesses its storage means and retrieves therefrom the mobile radio terminal B's forwarding number (step 403). Then, the battery charger 123 establishes the communication link 125 with the PSTN 107, and sends an appropriate command for causing the PSTN 107 to begin forwarding the wire-bound terminal C's calls to the mobile radio terminal B 102 (step 405).

The automatic cancelling of call forwarding from the wire-bound terminal C 103 to the mobile radio terminal B 102 will now be described with respect to FIG. 1 in conjunction with FIG. 5. The following steps are performed by circuitry in the battery charger 123 after the mobile radio terminal B 102 has been inserted into the battery charger 123. First, the battery charger 123 detects that the mobile radio terminal B 102 has been inserted into the battery charger 123 ("YES" PATH out of decision block 501). Then, the battery charger 123 establishes the communication link 125 with the PSTN 107, and sends an appropriate command for causing the PSTN 107 to cancel the call forwarding of the wire-bound terminal C's calls to the mobile radio terminal B 102 (step 405).

In another aspect of the invention, a verification is provided to ensure that the mobile radio terminal B 102 has been placed into an authorized receiving station. As mentioned earlier, such a feature may be desired for a number of reasons, including the need to assure that the personal communicator is not connected to inferior quality equipment that has the potential to damage the personal communicator, such as by improperly recharging the personal communicator's lithium battery, thereby causing it to catch fire or explode.

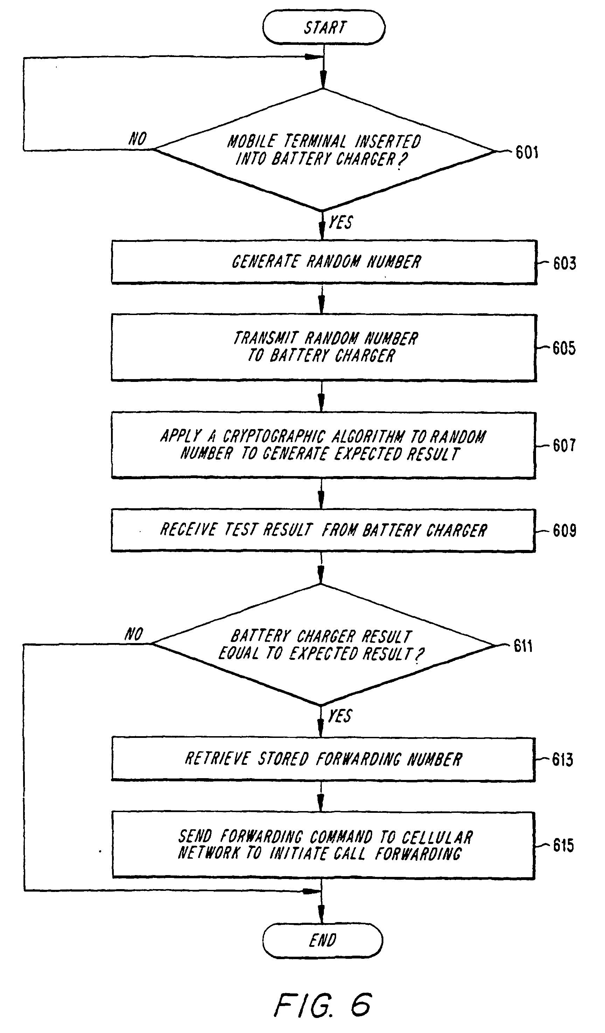

A preferred embodiment of this aspect of the invention will now be described with respect to FIG. 1 in conjunction with FIG. 6. The following steps are performed by the mobile radio terminal B 102 after it has been inserted into the battery charger 123. First, the mobile radio terminal B 102 detects that it has been inserted into the battery charger 123 ("YES" path out of decision block 601). Next, the mobile radio terminal B 102 generates a random number, using any of a number of well-known techniques (step 603). The communication interface between the mobile radio terminal B 102 and the battery charger 123 is then used to transfer a copy of the random number from the mobile radio terminal B 102 and the battery charger 123 (step 605).

The mobile radio terminal B 102 and the battery charger 123 each have processing means which apply a secret cryptographic algorithm to the random number (step 607). After the battery charger 123 generates a result from the cryptographic algorithm, this result is transmitted back to the mobile radio terminal B 102 (step 609). The mobile radio terminal B 102 then compares the received result with the one it was expecting (decision block 611). If the two results match ("YES" path out of decision block 611), then the mobile radio terminal B 102 proceeds to invoke call forwarding by retrieving the forwarding telephone number from the storing means (step 613) and then establishing a communication channel 117 with the MSC2 105, and sending the appropriate command to the cellular communications network for initiating the call forwarding service (step 615) as described above with respect to FIG. 2.

However, if the received result does not match the expected result ("NO" path out of decision block 611), then the processing of steps 613 and 615 is skipped, so that no call forwarding will be invoked. In an alternative embodiment, the mobile radio terminal B 102 will additionally disable the charging of its battery, to prevent possible damage from incompatible charging methods. As mentioned earlier, severe damage may occur by, for example, improperly recharging a lithium battery.

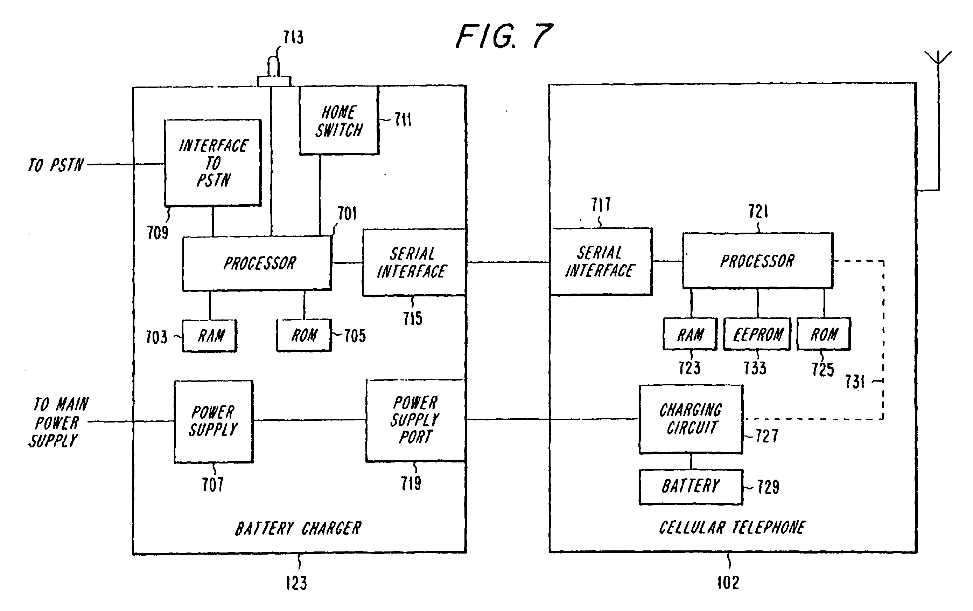

A block diagram of exemplary hardware for carrying out the invention will now be described with respect to FIG. 7. The components for implementing the invention are disposed in the battery charger 123 and in the mobile radio terminal B 102. The battery charger 123 includes a processor 701 coupled to a random access memory (RAM) 703 and to a read only memory (ROM) 705. The ROM 705 stores a program for controlling operation of the processor 701. The RAM 703 is used for storing variables, such as a forwarding telephone number. When the battery charger is designed to perform the automatic call forwarding as described above with respect to FIGS. 4 and 5, it includes an interface 709 to the PSTN 107. A power supply 707 within the battery charger 123 receives power from a main power supply, and generates therefrom suitable voltage and current levels for charging one or more batteries in the mobile radio terminal B 102.

In another aspect of the invention, the battery charger 123 may additionally include a home switch 711 coupled to the processor 701. The purpose of the home switch 711 is to cause the processor 701 to remove any divert function that is active on the wire-bound terminal C 103. The home switch 711 is useful, for example, in the following situation: Suppose a first family member leaves the house with the mobile radio terminal B 102. Removal of the mobile radio terminal B 102 from the battery charger 123 automatically causes the wire-bound terminal C's telephone calls to be forwarded to the mobile radio terminal B 102 as described above with respect to FIG. 4. This is the desired function when there is no one else at home. However, if someone else is home, then the first family member would push the home switch 711 just after lifting the mobile radio terminal B 102 from the battery charger 123. This causes the processor 701 to take appropriate steps to disable the just-invoked call forwarding.

In another situation, the first family member may leave the house with the mobile terminal B 102 at a time when no one else is at home, so that call forwarding is desired and left in force. If a second family member then returns home, he can push the home switch 711 and, again, cause any call forwarding of the wire-bound terminal C's telephone calls to the mobile radio terminal B 102 to cease. In another aspect of the invention, the battery charger may be further equipped with a dual color light emitting diode (LED) 713 to indicate the forwarding status of the wire-bound terminal C 103. For example, a red light may indicate that the wire-bound terminal C 103 is diverted to the mobile radio terminal B 102. A green light may indicate that the wire-bound terminal C 103 is not diverted, that is, that it is capable of receiving incoming calls.

The battery charger 123 further includes a serial communications interface 715 for coupling to a serial communications interface 717 located on the mobile radio terminal B 102. The purpose of each of these interfaces is to provide a mechanism for allowing each of the battery charger 123 and the mobile radio terminal B 102 to detect the presence of the other. A power supply port 719 on the battery charger 123 supplies the power for charging the battery located in the mobile radio terminal B 102.

In addition to the conventional radio communications circuitry (not shown) and the serial interface 717 described above, the mobile radio terminal B 102 includes a processor 721 coupled to a RAM 723, to a ROM 725 and to a non-volatile memory such as an electrically erasable programmable read only memory (EEPROM) 733. The ROM 725 stores a program for controlling operation of the processor 721, and may be designed to operate as described above with respect to FIGS. 2, 3 and 6. The RAM 723 is used for storing variables, such as a generated random number and an expected result from a cryptographic algorithm. The EEPROM 733 is used for storing variables, such as forwarding telephone numbers, that need to be retained even if power to the mobile radio terminal B 102 is lost.

The mobile radio terminal B 102 further includes a charging circuit 727 for recharging at least one battery 729. Power is supplied to the charging circuit 727 by the battery charger's power supply port 719. The charging circuit 727 may also include a connection 731 to the processor 721 so that the processor 721 can determine whether recharging should take place, as described above, and control the charging circuit 727 accordingly.

In another aspect of the invention, a mechanism may be provided to allow the user to disable the automatic call forwarding functions performed by the mobile radio terminal B 102. This mechanism may be in the form of a menu selection made by the user via an input/output unit (not shown) on the mobile radio terminal B 102, or it may alternatively be made by a switch (not shown) provided on the unit.

The invention has been described with reference to a particular embodiment. However, it will be readily apparent to those skilled in the art that it is possible to embody the invention in specific forms other than those of the preferred embodiment described above. This may be done without departing from the spirit of the invention. For example, the described embodiments include a battery charger into which the mobile radio terminal is inserted when in the vicinity of the wire-bound terminal. However, the presence of the battery charging circuitry is not essential to the invention. The battery charger may simply be replaced by a table stand or other receiving station for the mobile radio terminal, wherein the receiving station contains the call-forwarding circuitry described above, and is located near the wire-bound terminal.

Thus, the preferred embodiment is merely illustrative and should not be considered restrictive in any way. The scope of the invention is given by the appended claims, rather than the preceding description, and all variations and equivalents which fall within the range of the claims are intended to be embraced therein.

## Claims

1. An automatic call forwarding apparatus in a mobile communications unit, the automatic call forwarding apparatus comprising:
means for storing a forwarding telephone number;
means for detecting whether the mobile communications unit has been inserted into a receiving station;
means for retrieving the forwarding telephone number from the storing means in response to a detection that the mobile communications unit has been inserted into the receiving station;
means for generating a call forwarding initiation command that includes the retrieved forwarding telephone number; and
means for sending the generated call forwarding initiation command to a mobile communications network that controls call forwarding operations for the mobile communications unit, and
**characterized by**:
means for generating a random number;
means for transmitting the random number to the receiving station;
means for applying a cryptographic algorithm to the random number to generate an expected result;
means for receiving a test result from the receiving station; and
means for comparing the test result with the expected result,
wherein the means for sending the generated call forwarding initiation command to the mobile communications network operates only if the test result matches the expected result.

2. An automatic call forwarding system comprising:
a mobile communications unit including an automatic call forwarding apparatus as claimed in claim 1; and
a receiving station for the mobile communications unit, the receiving station comprising:
means for cooperating with the detecting means in the mobile communications unit to enable the detecting means to detect whether the mobile communications unit has been inserted into the receiving station,
means for receiving the random number from the mobile communications unit;
means for applying the cryptographic algorithm to the random number to generate the test result; and
means for supplying the test result to the mobile communications unit.

3. A method for automatically forwarding calls from a mobile communications unit to a hard-wired terminal, the method comprising the steps of:
in the mobile communications unit, storing a forwarding telephone number that is the telephone number of the hard-wired terminal;
detecting whether the mobile communications unit has been inserted into a receiving station (601);
retrieving the stored forwarding telephone number in response to a detection that the mobile communications unit has been inserted into the receiving station (613);
generating a call forwarding initiation command that includes the retrieved forwarding telephone number; and
sending the generated call forwarding initiation command to a mobile communications network that controls call forwarding operations for the mobile communications unit (615),
**characterized by** the steps of:
generating a random number in the mobile communications unit (603);
transmitting the random number to the receiving station (605);
in the mobile communications unit, applying a cryptographic algorithm to the random number to generate an expected result (607);
receiving a test result from the receiving station (609); and
comparing the test result with the expected result (611),
wherein the step of sending the generated call forwarding initiation command to the mobile communications network is performed only if the test result matches the expected result.

4. A method as claimed in claim 3, further comprising the steps of:
in the receiving station:
receiving the random number from the mobile communications unit;
applying the cryptographic algorithm to the random number to generate a test result; and
supplying the test result to the mobile communications unit.

## Revendications

1. Appareil de réacheminement automatique d'appels dans une unité de communication mobile, l'appareil de réacheminement automatique d'appels comprenant :
un moyen pour stocker un numéro de téléphone de réacheminement ;
un moyen pour détecter si l'unité de communication mobile a été insérée dans une station de réception ;
un moyen pour obtenir le numéro de téléphone de réacheminement du moyen de stockage en réponse à la détection de l'insertion de l'unité de communication mobile dans la station de réception ;
un moyen pour produire une instruction de lancement du réacheminement d'appel qui comprend le numéro de téléphone de réacheminement obtenu ; et
un moyen pour émettre l'instruction de lancement du réacheminement d'appel produite vers un réseau de communication mobile qui commande les opérations de réacheminement d'appel pour l'unité de communication mobile, et
**caractérisé par** :
un moyen pour produire un nombre aléatoire ;
un moyen d'émettre le nombre aléatoire vers la station de réception ;
un moyen pour appliquer un algorithme cryptographique au nombre aléatoire afin de produire un résultat attendu ;
un moyen pour recevoir un résultat d'essai de la station de réception ; et
un moyen pour comparer le résultat d'essai et le résultat attendu,
dans lequel le moyen pour émettre l'instruction de lancement du réacheminement d'appel produite vers le réseau de communication mobile ne fonctionne que si le résultat d'essai coïncide avec le résultat attendu.

2. Système de réacheminement automatique d'appels comprenant :
une unité de communication mobile incluant un appareil de réacheminement automatique d'appels selon la revendication 1 ; et
une station de réception pour l'unité de communication mobile, la station de réception comprenant :
un moyen pour coopérer avec le moyen de détection dans l'unité de communication mobile pour permettre au moyen de détection de détecter si l'unité de communication mobile a été insérée dans la station de réception ;
un moyen pour recevoir le nombre aléatoire depuis l'unité de communication mobile ;
un moyen pour appliquer l'algorithme cryptographique au nombre aléatoire pour produire le résultat d'essai ; et
un moyen pour fournir le résultat d'essai à l'unité de communication mobile.

3. Procédé de réacheminement automatique des appels entre une unité mobile de communication et un terminal fixe, le procédé comprenant les étapes consistant à :
dans l'unité de communication mobile, stocker un numéro de téléphone de réacheminement qui est le numéro de téléphone du terminal fixe ;
détecter si l'unité de communication mobile a été insérée dans une station de réception (601) ;
obtenir le numéro de téléphone de réacheminement stocké, en réponse à la détection de l'insertion de l'unité de communication mobile dans la station de réception (613) ;
produire une instruction de lancement du réacheminement d'appel qui inclut le numéro de téléphone de réacheminement obtenu ; et
émettre l'instruction de lancement de réacheminement d'appel produite vers un réseau de communication mobile qui commande les opérations de réacheminement d'appel pour l'unité de communication mobile (615),
**caractérisé par** les étapes consistant à :
produire un nombre aléatoire dans l'unité de communication mobile (603) ;
émettre le nombre aléatoire vers la station de réception (605) ;
dans l'unité de communication mobile, appliquer un algorithme cryptographique au nombre aléatoire pour produire un résultat attendu (607) ;
recevoir un résultat d'essai depuis la station de réception (609) ; et
comparer le résultat d'essai et le résultat attendu (611),
dans lequel l'étape consistant à émettre l'instruction de lancement du réacheminement d'appel produite n'est exécutée que si le résultat d'essai coïncide avec le résultat attendu.

4. Procédé selon la revendication 3, comprenant en outre les étapes consistant à :
dans la station de réception :
recevoir le nombre aléatoire depuis l'unité de communication mobile ;
appliquer l'algorithme cryptographique au nombre aléatoire pour produire un résultat d'essai ; et
fournir le résultat d'essai à l'unité de communication mobile.

## Patentansprüche

1. Automatische Rufweiterleitungseinrichtung in einer Mobilkommunikationseinheit, wobei die automatische Rufweiterleitungseinrichtung umfasst:
eine Vorrichtung zum Speichern einer Weiterleitungstelefonnummer;
eine Vorrichtung zum Erfassen, ob die Mobilkommunikationseinheit in einer Empfangsstation aufgenommen ist;
eine Vorrichtung zum Holen der Weiterleitungstelefonnummer aus der Speichervorrichtung ansprechend auf ein Erfassen, dass die Kommunikationseinheit in die Empfangsstation eingefügt worden ist;
eine Vorrichtung zum Erzeugen eines Rufweiterleitungsveranlassungsbefehls, der das Einholen der Weiterleitungstelefonnummer einschließt; und
eine Vorrichtung zum Senden des erzeugten Rufweiterleitungsveranlassungsbefehls an ein Mobilkommunikationsnetz, das Rufweiterleitungsoperationen für die Mobilkommunikationseinheit steuert, und
**gekennzeichnet durch**:
eine Vorrichtung zum Erzeugen einer Zufallszahl;
eine Vorrichtung zum Senden einer Zufallszahl;
eine Vorrichtung zum Senden der Zufallszahl zu der Empfangsstation;
eine Vorrichtung zum Anwenden eines kryptographischen Algorithmus auf die Zufallszahl zum Erzeugen eines erwarteten Ergebnisses;
eine Vorrichtung zum Empfangen eines Testergebnisses von der Empfangsstation; und
eine Vorrichtung zum Vergleichen des Testergebnisses mit dem erwarteten Ergebnis,
wobei die Vorrichtung zum Senden des erzeugten Rufweiterleitungsveranlassungsbefehls zu dem Mobilkommunikationsnetz nur arbeitet, wenn das Testergebnis mit dem erwarteten Ergebnis übereinstimmt.

2. Automatisches Rufweiterleitungssystem, umfassend:
eine Mobilkommunikationseinheit, die eine automatische Rufweiterleitungseinrichtung nach Anspruch 1 einschließt; und
eine Empfangsstation für die Mobilkommunikationseinheit,
wobei die Empfangsstation umfasst:
eine Vorrichtung zum Kooperieren mit der Erfassungsvorrichtung in der Mobilkommunikationseinheit, um die Erfassungsvorrichtung in die Lage zu versetzen, zu erfassen, ob die Mobilkommunikationseinheit in die Empfangsstation eingefügt ist,
eine Vorrichtung zum Empfangen der Zufallszahl von der Mobilkommunikationseinheit;
eine Vorrichtung zum Anwenden des kryptographischen Algorithmus auf die Zufallszahl zum Erzeugen des Testergebnisses; und
eine Vorrichtung zum Zuführen des Testergebnisses zu der Mobilkommunikationseinheit.

3. Verfahren zum automatischen Weiterleiten von Rufen von einer Mobilkommunikationseinheit zu einem hartverdrahteten Endgerät, wobei das Verfahren die Schritte umfasst:
in der Mobilkommunikationseinheit, Speichern einer Weiterleitungstelefonnummer, die die Telefonnummer des hartverdrahteten Endgerätes ist;
Erfassen, ob die Mobilkommunikationseinheit in einer Empfangsstation (601) eingefügt ist;
Holen der gespeicherten Weiterleitungstelefonnummer ansprechend auf das Erfassen, dass die Mobilkommunikationseinheit in die Empfangsstation (613) eingefügt ist;
Erzeugen eines Rufweiterleitungsveranlassungsbefehls, der die geholte Weiterleitungstelefonnummer einschließt; und
Senden des erzeugten Rufweiterleitungsveranlassungsbefehls zu einem Mobilkommunikationsnetz, das Rufweiterleitungsvorgänge für die Mobilkommunikationseinheit (615) steuert,
**gekennzeichnet durch** die Schritte :
Erzeugen einer Zufallszahl in der Mobilkommunikationseinheit (603);
Senden der Zufallszahl zu der Empfangsstation (605);
in der Mobilkommunikationseinheit, Anwenden eines kryptographischen Algorithmus auf die Zufallszahl zum Erzeugen eines erwarteten Ergebnisses (607);
Empfangen eines Testergebnisses von der Empfangsstation (609); und
Vergleichen des Testergebnisses mit dem erwarteten Ergebnis (611),
wobei der Schritt des Sendens des erzeugten Rufweiterleitungsveranlassungsbefehls zu dem Mobilkommunikationsnetz nur ausgeführt wird, wenn das Testergebnis mit dem erwarteten Ergebnis übereinstimmt.

4. Verfahren nach Anspruch 3, ferner die Schritte umfassend:
in der Empfangsstation:
Empfangen der Zufallszahl von der Mobilkommunikationseinheit;
Anwenden des kryptographischen Algorithmus auf die Zufallszahl zum Erzeugen eines Testergebnisses; und
Zuführen des Testergebnisses zu der Mobilkommunikationseinheit.
